(19) 

**Europäisches Patentamt**
**European Patent Office**
**Office européen des brevets**

(11) **EP 1 884 893 A1**

(12) **EUROPEAN PATENT APPLICATION**

(43) Date of publication:
**06.02.2008 Bulletin 2008/06**

(51) Int Cl.:
*G06T 7/00* (2006.01)      *G06T 7/20* (2006.01)
*G06T 9/00* (2006.01)

(21) Application number: **06254090.1**

(22) Date of filing: **03.08.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(71) Applicants:
• **Mitsubishi Electric Information Technology
Centre
Europe B.V.
Guildford GU2 7YD (GB)**
• **MITSUBISHI DENKI KABUSHIKI KAISHA
Chiyoda-ku, Tokyo 100-8310 (JP)**

(72) Inventors:
• **Bober, Miroslaw
Merrow,
Guildford (GB)**
• **Sibiryakov, Alexander
Guildford,
Surrey GU2 9TJ (GB)**

(74) Representative: **Whitlock, Holly Elizabeth Ann et al**
**R.G.C. Jenkins & Co.
26 Caxton Street
London SW1H 0RJ (GB)**

(54) **Sparse integral image description with application to motion analysis**

(57) A method of representing an image comprises deriving at least one 1-dimensional representation of the image by projecting the image onto an axis, wherein the projection involves summing values of selected pixels in a respective line of the image perpendicular to said axis, characterised in that the number of selected pixels is less than the number of pixels in the line.

**Fig.3**

**Description**

Image projections describe integral image properties, which are useful for many applications such as motion and change analysis. Image processing algorithms use computation of image projections to reduce a two-dimensional problem to a set of one-dimensional problems. The main reasons for such reduction include:

- Computational complexity of 1D-problems is much lower. For an image of size *W x H* pixels even a simple pixel-by-pixel scan requires *O(WH)* operations and the algorithms usually consist of multiple scans. The projection-based algorithm requires one image scan to compute image projections and a few projection scans with *O*(*W*) and *O*(*H*) complexity.
- In some cases it is easier to detect objects or other image features in 1D projections functions than in 2D image functions

Each value of the horizontal (or vertical) projection is obtained by summing all pixels in the corresponding column (or row). Thus the number of additions required for both projections is

$$N_{standard} = 2WH. \qquad\qquad (1)$$

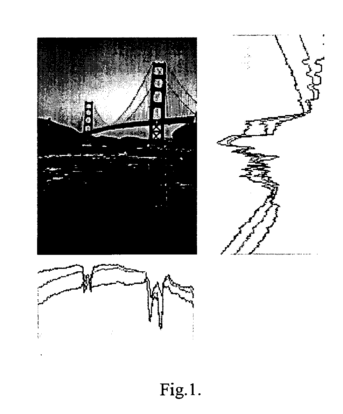

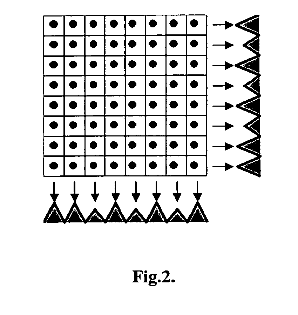

An example of image projections, computed for three colour channels, is shown in Fig. 1. This example shows that complex structures (vertical parts of the bridge) can be detected in horizontal projections by searching their local minima. The schematic way of projection computation is shown in Fig.2, where sum of pixels in each row (or column) determines the corresponding value (shown by an arrow) of the projection function. The scanned pixels are marked by dots.

In a real-time system, especially in those implemented in low-cost DSP boards, even O(*WH*) complexity of projection computation still may be too high for real-time performance. The present invention discloses methods to further reduce this complexity by factors of 2,3,4... without significant impact on accuracy of the particular algorithm. We obtain an approximation for the projections and show that such approximations can be used in an image processing algorithm in the same way as the standard projections.

Embodiments of the present invention use special kinds of image projections, called Block-based projections or, simply, $B_{n,m}$-projections where *n* x *m* is an elementary block size. Non-overlapping blocks of *n* x *m* pixels tile the entire image and *n* pixels from each block are used to update exactly *n* values of the horizontal $B_{n,m}$-projection and *m* pixels from each block are used to update exactly m values of the vertical $B_{n,m}$-projection.

When the block sizes are equal (n=m) we will call such $B_{n,n}$-projections $B_n$-*projections.* The algorithms for computation of $B_n$-*projections* are simpler and do not require additional computational overhead as in the general case of $B_{n,m}$-projections.

According to the definition of $B_{n,m}$-projection, the standard projections (Fig. 1,2) can also be called as $B_1$-*projections,* indicating that the elementary blocks consist of one pixel. Also, according to the definition, the $B_{n,m}$- projection has the same length as a standard projection, so the original image resolution is preserved. This opens a possibility of using a $B_{n,m}$-projection in any image processing algorithm, where the standard projections are used. Also, some particular cases of $B_{n,m}$-projections can be used in situations where standard projections cannot be applied without additional pre-processing of the image. One example of such situation is processing of image represented by Bayer pattern.

Aspects of the invention are set out in the accompanying claims.

In a first aspect, the invention provides a method of representing an image comprising deriving at least one 1-dimensional representation of the image by projecting the image onto an axis, wherein the projection involves summing values of selected pixels in a respective line of the image perpendicular to said axis, characterised in that the number of selected pixels is less than the number of pixels in the line.

Preferably, the projection involves summing values of selected pixels in a plurality of respective lines, wherein the number of selected pixels in at least one line is less than the number of pixels in the respective line.

The number of selected pixels in a plurality of respective lines perpendicular to a respective axis may be less than the number of pixels in the respective lines. The number of selected pixels in all lines perpendicular to a respective axis may be less than the number of pixels in the respective lines.

There may be more than one projection, onto more than one respective axis. Preferably, the image is a 2-dimensional image, and there are projections onto each of two respective axes, the projections being as set out above. Preferably, the axes are perpendicular, such as horizontal and vertical axes.

In an embodiment, selected pixels are obtained by omitting pixels from each i-th row, in a vertical projection, and each j-th column, in a horizontal projection. For example, pixels in every second row, or every second and third row, may be omitted, and pixels in every third column, or every second and third column, may be omitted.

In the specification, the term "selected pixel" means that the value for the selected pixel is included in the summing for a projection. "Omitted pixel" means that the corresponding pixel value is not selected, that is, not included in the summing for a projection. Pixels selected for one projection, such as a horizontal projection, may be omitted for another projection, such as a vertical projection, and vice versa. Generally, a selected pixel in the context of a block means the pixel is included in the sum for at least one projection, and a selected pixel in the context of a line means the pixel is included in the sum in the projection along the line.

In general terms, embodiments of the proposed method work as follows:

1) Perform image scanning with skipping of some pixels. One of the following methods, described in the next section, or their combination, can be used for scanning:

- Row/column skipping
- Diagonal skipping
- Block permutation

2) Compute vertical and horizontal $B_{n,m}$-projections by summing image rows or columns using only visited pixels and store them in memory buffers.

Qualitative and numerical comparison of the proposed methods leads to the following conclusions:

- Three methods described in the next section require equal number of elementary operations (additions) to compute the projections.
- The total time required by the diagonal skipping method is less than the time required by the other methods.
- All three methods gives similar results for $n,m=2,3,4.$ The projections obtained using such block sizes do not deviate significantly from the standard projection, obtained with n=m=1.
- While we obtained significant increase in algorithm speed by factor of n, the obtained projections can differ from standard projections by noise and artefacts, which are very small for $n,m=2,3,4.$ The signal processing methods are usually robust to such small factors, so our $B_{n,m}$-projections can be used instead of standard projections.

Embodiments of the invention will be described with reference to the accompanying drawings of which:

Fig. 1 shows an image and its vertical and horizontal projections, according to the prior art;
Fig. 2 is a diagram illustrating vertical and horizontal projections according to the prior art;
Fig. 3 is a diagram illustrating projections according to a first embodiment of the invention;
Fig. 4 is an alternative diagram illustrating projections according to the first embodiment of the invention;
Fig. 5 is a diagram illustrating projections according to a second embodiment of the invention;
Fig. 6 is a diagram of blocks with selected pixels according to a third embodiment of the invention;
Fig. 7 is a diagram illustrating projections according to a fourth embodiment of the invention;
Fig. 8 is a diagram illustrating selected pictures in an image according to a fifth embodiment of the invention;
Fig. 9 is a diagram illustrating projections according to a sixth embodiment of the invention;
Fig. 10 is a diagram illustrating horizontal motion estimation using projections;
Fig. 11 is a block diagram illustrating a form of motion estimation;
Fig. 12 is an example of a Bayer pattern;
Fig. 13 is a block diagram illustrating another form of motion estimation;
Fig. 14 is a block diagram illustrating another form of motion estimation;
Fig. 15 is an image illustrating motion estimation using a Bayer pattern;
Fig. 16 is a block diagram of a form of motion sensing.

Embodiments of the present invention are developments of the prior art relating to computation of image projections for representing images, including our co-pending application GB 0425430.6 which is incorporated herein by reference.

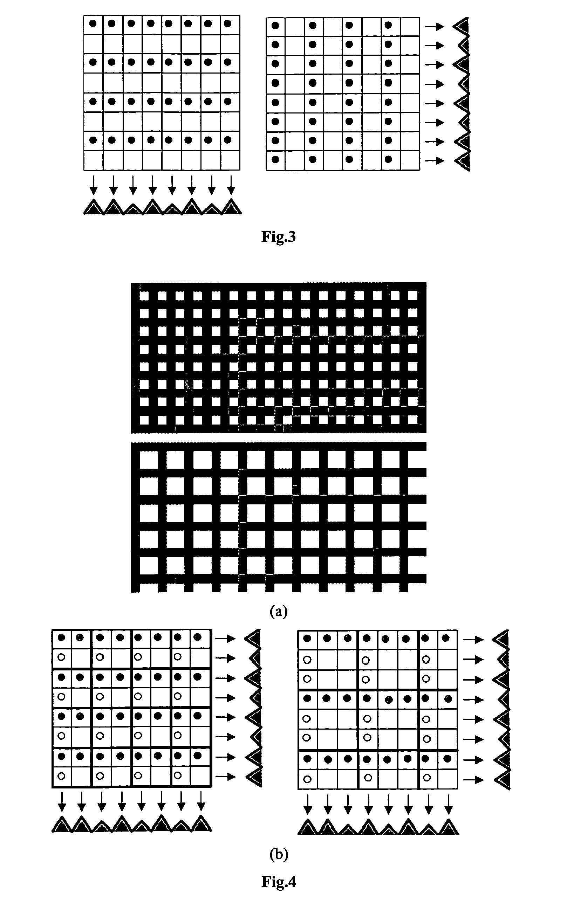

A scheme for computing the $B_n$-projections according to a first embodiment of the invention is illustrated in Fig. 3. $B_n$-projections are computed by row/column skipping. Only the marked pixels shown in Fig. 3 are used to compute the corresponding projections.

Two image scans are used; each computes the corresponding projection. To compute the X-projection each n-th row is skipped. Similarly, to compute Y-projection each n-th column is skipped.

This method (row/column skipping) can also be illustrated by a block-based representation. Fig.4 shows an example using 2x2 blocks. Fig. 4(a) shows examples of a real image region (such as a small region of the image of Fig. 1) for the block sizes $n=2$ and $n=3$. The skipped pixels are shown in white. Fig. 4.(b) shows schematic representations of the computation method for the block sizes $n=2$ and $n=3$. Only the marked pixels are used to compute the corresponding projections. Black pixels are used for both projections. Grey pixels are used for X-projection. White pixels are used for Y-projection.

This example shows that computational complexity of the algorithm is proportional to 3 $WH$/4, as only 3 pixels of each block are used. For the general case of n x n block the computational complexity $C_{row/col}$ is proportional to $(2n-1)WH/n^2$:

$$C_{row/col}(\text{n}) = k_1(2n\text{-}1)WH/\,\text{n}^2 \tag{2}$$

where the constant $k_1$ accounts for additional overhead of image scanning. The number of additions required by this method is obtained from the fact that $2(n\text{-}1)$ pixels from a block are added to projections once and only one pixel from the block is used twice. So the number of additions is:

$$N_{row/col}(n) = 2WH/n \leq N_{standard} \tag{3}$$

In a second embodiment, $B_n$-projections are computed by diagonal skipping.

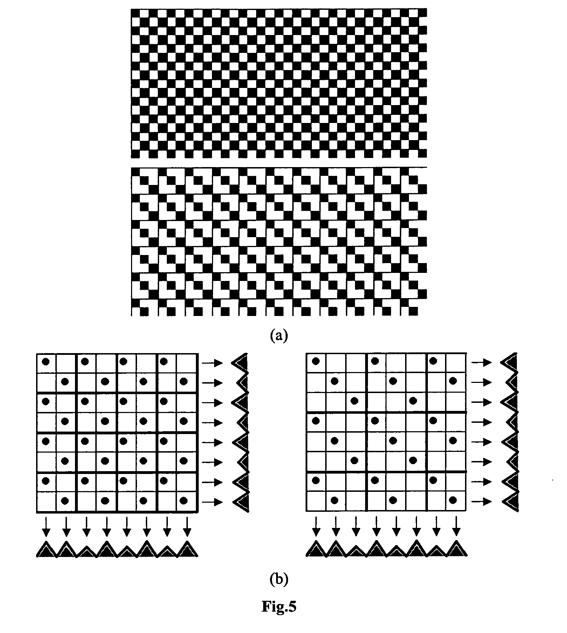

The method of diagonal skipping is illustrated in Fig. 5. Fig. 5(a) shows examples of a real image (such as a small region of the image from Fig. 1) for $n=2$ and $n=3$. The skipped pixels are shown in white. Fig. 5(b) is a schematic representation of the computation method. In each elementary block only the pixels from the main diagonal (marked by dots) are used.

To compute the $B_n$-projection some image diagonals are skipped, and only those pixels $(x,y)$ satisfying the equality (4) are used.

$$(x+y) \bmod n = 0 \tag{4}$$

This means that in each elementary block only the pixels from the main diagonal are used. So the computational complexity $C_{diag}$ of this method is proportional to n (number of pixels in the main diagonal of each block) multiplied by number of blocks $WH/n^2$:

$$C_{diag} = k_2\,WH/n \tag{5}$$

The constants $k_2$ also takes into account the computation of (4) and other overheads of image scanning. From experimental testing it follows that $C_{diag} < C_{row/col}$. Each pixel belonging to the block's diagonal is used twice, so the number of additions is:

$$N_{diag}(n) = 2WH/n = N_{row/col}(n) \tag{6}$$

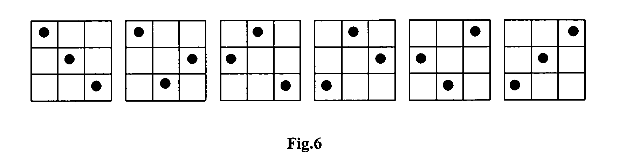

In a third embodiment, $B_n$-projections are computed by block permutation. Fig. 6 shows examples of 3x3 blocks, indicating selected pixels used in the projections generated by row (or, equivalently, column) permutations.

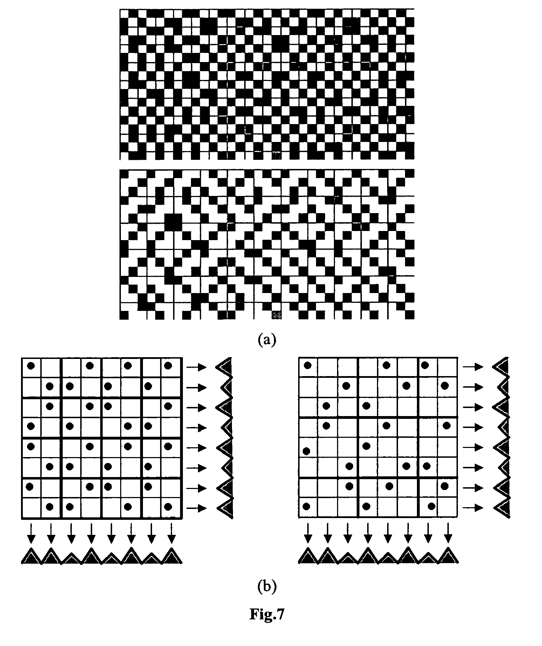

The method of $B_n$-projection computation of the third embodiment can be viewed as a modification of the diagonal skipping method of the second embodiment. In this method each elementary block is preliminary transformed by a row (or, equivalently, column) permutation (Fig.6). A random or non-random set of permutations can be used. Fig.7 shows examples of using this method with random permutations. Random permutations of elementary blocks for n=2 and n = 3 are illustrated. Fig. 7(a) shows examples of a real image (such as a small region of the image from Fig. 1). The skipped pixels are shown in white. Fig. 7(b) is a schematic representation of the computation method. Only the marked pixels are used for the projection computation.

The computational complexity $C_{perm}$ is similar to (5)

$$C_{perm} = k_3\, WH/n, \tag{7}$$

but a more complex algorithm is used to scan the pixels. For the efficient implementation of the scan algorithm the pixel positions (marked in Fig.6) should be pre-computed and stored in a memory table. The constant $k_3$ in (7) takes into account the complexity of the scanning algorithm, and generally $C_{diag} < C_{perm}$. In this method n pixels from each block are used twice (to contribute to both horizontal and vertical projections), so the number of additions is:

$$N_{perm}(n) = 2WH/n = N_{diag}(n) \tag{8}$$

A modification of the above embodiments involves combination of different block sizes

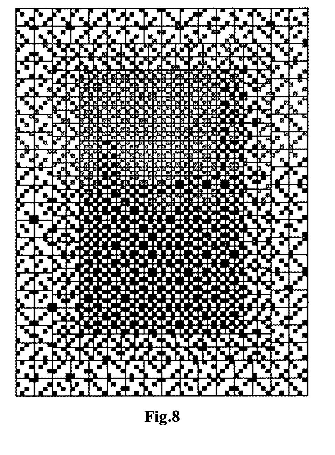

In some image processing methods some image parts may be more important than the others. For example, in case of a moving video camera the pixels near the image borders, which are opposite to camera motion direction, disappear from frame to frame. Such pixels are usually excluded from the analysis or their impact is reduced by different techniques, such as windowing. In this case more approximate and faster methods of image projection computation may be used. For example, $B_2$-projections can be used in the central part of the image, and $B_n$-projections (n>2) near the borders (see Fig.8). In Fig. 8, the block permutation method is used only for demonstration purposes.. Different methods can be used in different areas of the image. The additional overhead of this method is that each pixel before summing into the projection should be weighted by the size (equal to n) of its block.

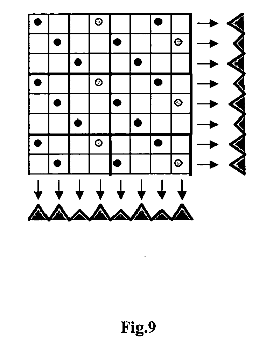

The general case of $B_{n,m}$-projections can be used for images with aspect ratio different from 1:1. For example, for standard VGA images of 640x480 pixels, the blocks $B_{4,3}$ with aspect ratio 4:3 can be used to ensure that equal number of pixels contribute to both vertical and horizontal projection. Such computation can be accomplished by, for example, combination of diagonal skipping and column skipping methods as shown in Fig.9. In Fig. 9, the black pixels contribute to both projections, and grey pixels contribute only to the horizontal projection.

As described above, different block sizes can be used for different areas of an image. Similarly, different methods of projection computations (pixel selections) can be used for different areas of an image, or in combination in a block. Different methods can be combined.

The result of the projection computations can be regarded as a representation of the image, or an image descriptor. More specifically, the results can be regarded as sparse integral image descriptors.

The methods of representing images as described above can be applied in any image processing system, which computes the image projections to analyse the image. Applications of embodiments of the present invention to three known image processing methods, which will benefit from the proposed fast computation of image projections, are outlined below. Also, novel applications, in particular, motion estimation from the Bayer pattern and following from it an ego-motion sensor, are proposed.

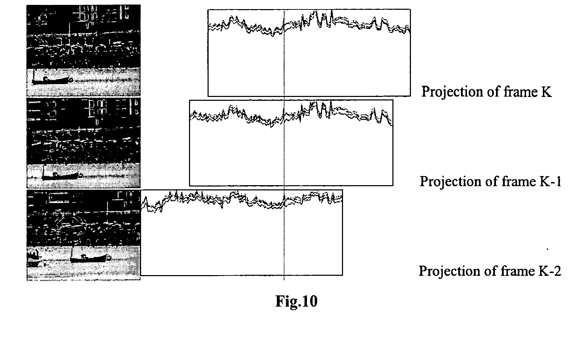

A first known technique is dominant translational motion estimation, which is based on the fact that shifting of the image results in shifted projections. Fig. 10 illustrates horizontal motion estimation between three successive video frames by estimating of ID-shift between horizontal projections. One of the earliest works on this topic was reported in S.Alliney, C.Morandi, Digital image registration using projections, IEEE TPAMI-8, No.2, March 1986, pp.222-223. It was further improved in our co-pending application GB 0425430.6. For this method we propose to use $B_n$-projections instead of standard projections.

Two or more image projections, computed from successive images, are used to estimate a corresponding component of the dominant motion (Fig. 10). Fig. 10 shows three successive frames, frame K-2, frame K-1 and frame K, and their corresponding horizontal projections. Any state-of-the art method of signal shift estimation can be used, such as normalized cross-correlation (NCC), sum of absolute or squared difference (SAD or SSD), or phase correlation (PC), for comparing the projections to determine the shift between the frames.

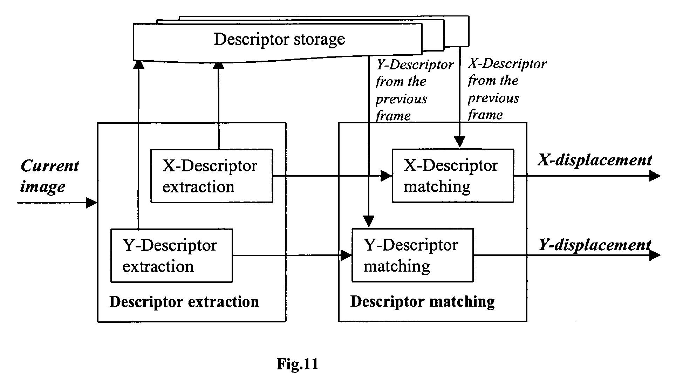

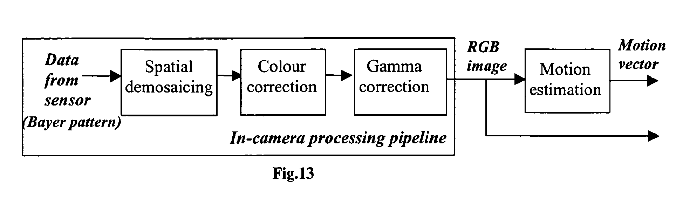

A second known technique is dominant motion estimation method, consisting of two main steps: image descriptor extraction and descriptor matching (see Fig. 11). Fig. 11 (and also Figs. 13, 14 and 16) illustrate steps of motion estimation or motion sensing methods. The steps of the methods as shown in the Figures can be implemented by corresponding components or modules of an apparatus.

As shown in Fig. 11, an image descriptor consists of two independent parts - horizontal (X-descriptor) and vertical (Y-descriptor). The main idea of the descriptor extraction is to convert 2D image information to ID-signals at an early stage of processing. Using embodiments of the invention, the descriptors are derived from the $B_n$-projections. Depending on what kind of matching method is used, the descriptor can be:

- The $B_n$-projection itself (for matching in the signal domain)
- The Fourier transform of $B_n$-projection (for matching in the frequency domain)

The descriptor matching block uses the descriptor of the current frame and the descriptor computed for the previous frame. In one embodiment of the proposed method phase correlation is used for 1D shift estimation. The method is based on the Fourier Transform and the Shift Theorem. If two signals, which are the $B_n$-projections in the proposed method, say $s_1(x)$ and $s_2(x)$, differ only by translation $a$:

$$s(x) = s'(x + a),$$

Then applying phase correlation method

$$C = F^{-1}\left\{ \frac{F(s)F^*(s')}{\left| F(s)F^*(s') \right|} \right\},$$

where F(s) is Fourier transform of a signal s, which is pre-computed at the descriptor extraction stage, $F^*(s)$ is a complex conjugation of $F(s)$, a pulse is obtained at the relative displacement value:

$$C(x) = \delta(x - a)$$

The displacement a is determined by finding the highest peak in the resulting signal C(x).

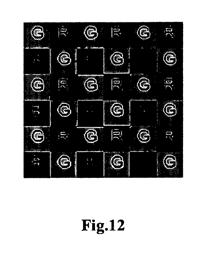

Another known method of detecting dominant motion uses a Bayer pattern. The majority of single-chip video cameras, and almost all digital still cameras, use so-called Bayer pattern sensors. These sensors may be either CMOS or CCD devices but the principles are the same. The Bayer pattern approach, US 3,971,065, uses a special pattern as one of the many possible implementations of colour filter arrays. An example of a Bayer pattern is shown in Fig. 12. Other implementations mostly use the principle that the luminance channel (green) needs to be sampled at a higher rate than the chromatic channels (red and blue). The choice for green as representative of the luminance can be explained by the fact that the luminance response curve of the human eye is close to the frequency of green light (~550nm).

To process an image from the Bayer pattern, a lot of methods exist. A general image-processing pipeline in a digital camera can be mainly divided into the following steps: spatial demosaicing followed by colour and gamma correction (Fig.13 - motion estimation using an output image from a video camera or a DSC). To interpolate colour values at each pixel, Bayer proposed simple bilinear interpolation. At the beginning of the development of digital still cameras, US 4,642,678 suggested to use a constant hue-based interpolation, since pixel artefacts in the demosaicking process are caused in sudden jumps in hue. US 4,774,565 then proposed to use a median-based interpolation of the colour channels to avoid colour fringes. US 5,382,976 suggested to adaptively interpolate a full colour image by using an edge-based technique. US 5,373,322 suggested an edge-based method approved, which can be seen as an extension of the US 5,382,976 approach. US 5,629,734 used the concepts of both edge-based methods and created a combination and extension of these approaches. The difficulty of Bayer pattern demosaicking is still an active topic in the computer vision community, e.g. see Henrique Malvar, Li-wei He, and Ross Cutler, High-quality linear interpolation for demosaicing of Bayer-patterned color images, IEEE International Conference on Speech, Acoustics, and Signal Processing, 2004.

Most of the image processing methods, including motion estimation methods, require the final colour image (the result of the Bayer pattern processing) to be obtained by pixel interpolation. Design of a direct method opens a possibility to estimate high-level information (such as motion) directly from the image sensor data (i.e. without the costly demosaicing).

The vertical and horizontal projections in the dominant motion estimation method are computed using one of the following:

- Any RGB-image channel (preferably Green, having largest dynamic range)
- Image intensity (derived from all colour channels)
- Y-channel of the YCrCb colour space, usually available from camera buffer
- Any other combination of original or processed colour channels

So, to use the projection-based method requires processing of Bayer pattern and converting it to a standard colour image. The speed of this process may not be suitable for embedded motion estimation algorithm; so further modification of the method is required to avoid intermediate processing of the Bayer pattern.

The vertical and horizontal projections are computed by summing image pixels. And this computation requires exactly 2 WH additions as shown above. Downsampling of the image by factor m reduces the number of additions to $WH/m^2$, but proportionally reduces the accuracy of the estimated motion vector, and may require additional number of operations proportional to $WH$ for the downsampling process itself.

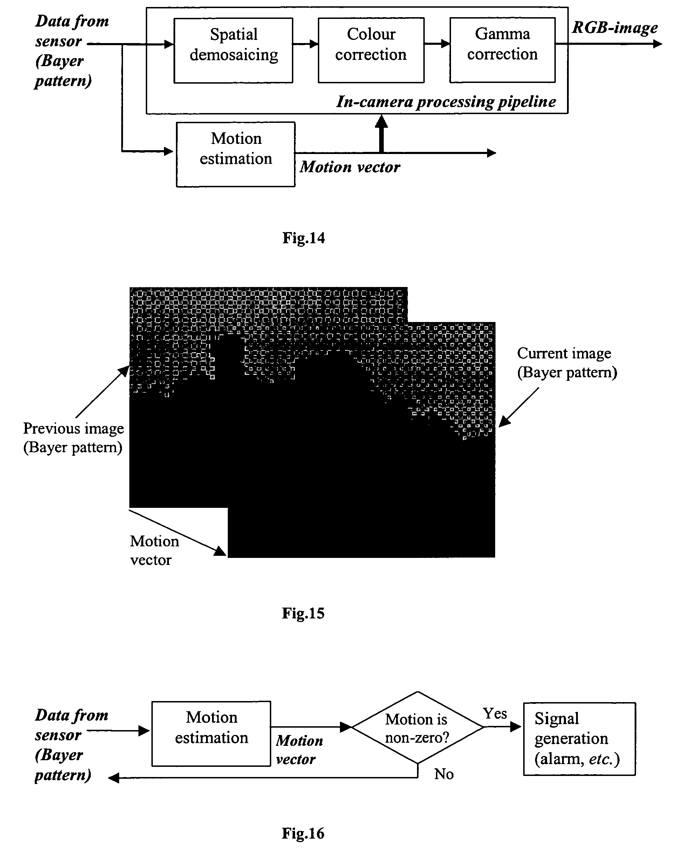

A further embodiment of the present invention provides a fast motion estimation algorithm working directly with Bayer (or Bayer-like) pattern as shown in Fig. 14 and Fig. 15.

Fig. 14 is a block diagram of the processing pipeline with motion estimation at an early stage. Fig. 15 illustrates image motion estimation using a Bayer pattern representation.

According to the embodiment, $B_n$-projections are computed by diagonal skipping or block permutation methods. If we consider $n=2$ (Fig.5, left column), this pattern is exactly corresponds to the green channel of the Bayer pattern (Fig. 12) or yellow channel of the CMY Bayer pattern. By adjusting the set of permutations in the block permutation method, different Bayer-like patterns and a pseudo-random Bayer pattern can be modelled.

Useful properties of the proposed method include:

- Usage of Bayer pattern (both RGB and CMY) directly from CCD or CMOS sensor and avoiding expensive colour interpolation and correction algorithms having complexity proportional to number of pixels
- Motion estimation in earliest stage, just after receiving the image from sensor. The information about the detected motion can be used in other stages of processing, for example, for denoising the Bayer pattern before demosaicing or for motion blur reducing.

Faster modifications are possible with complexity proportional $1/n$ of number of pixels by using $B_n$-projections computed by diagonal skipping method.

- Original resolution of motion vector is preserved (and additionally enhanced using subpixel interpolation)
- Extension to different configurations of Bayer pattern is possible by using $B_n$-projections computed by block permutation method.

The method presented in the previous section can be used to create low-cost ego-motion video-sensors for security or other systems. For example, this sensor generates a signal when it starts to move. Such sensor consists of video camera (preferably low-cost) and small CCD or CMOS matrix. In this case all color correction/interpolation procedures, which is usually used for Bayer pattern processing (Fig. 16), are not necessary and motion estimation via $B_n$-projections is a very effective method to implement such a sensor. Fig.17 shows an abstract block-scheme of such sensor work.

Image projections can be used to detect sudden illumination change, including global illumination change. The behaviour of image projection reflects the illumination change. For example, the negative difference of projections from successive frames signals on drop of the illumination level. Such feature can be used to notify the image processing system to adapt its parameters for a new illumination level. It is important for this auxiliary feature to perform fast in order to not slow down the entire process. Using $B_n$-projections improves the performance of this feature by factor of $n$.

In relatively simple scenes (such as a light object in a dark background or vice versa) the 2D-problem of object tracking can be reduced to 1D-tracking problems using image projections. In such cases the object position is determined by local maxima (or minima) of a projection. Possible application areas of such methods are aircraft tracking, microscopic and radar imagery. In case of large number of objects or limitations in time, the $B_n$-projections can be used instead of standard projections to improve the performance.

In the embodiments, generally two projections (horizontal and vertical) are computed and used. However, only one projection may be computed and/or used (as, for example, in the horizontal translation motion estimation example).

In this specification, the terms "image" and "frame" are used to describe an image unit, including after filtering, but the term also applies to other similar terminology such as image, field, picture, or sub-units or regions of an image, frame etc. The terms pixels and blocks or groups of pixels may be used interchangeably where appropriate. In the specification, the term image means a whole image or a region of an image, except where apparent from the context. Similarly, a region of an image can mean the whole image. An image includes a frame or a field, and relates to a still image or an image in a sequence of images such as a film or video, or in a related group of images.

The image may be a grayscale or colour image, or another type of multispectral image, for example, IR, UV or other electromagnetic image, or an acoustic image etc. The image is preferably a 2-dimensional image but may be an n-dimensional image where n is greater than 2.

The invention can be implemented for example using an apparatus processing signals corresponding to images. The apparatus could be, for example, a computer system, with suitable software and/or hardware modifications. For example, the invention can be implemented using a computer or similar having control or processing means such as a processor or control device, data storage means, including image storage means, such as memory, magnetic storage, CD, DVD etc, data output means such as a display or monitor or printer, data input means such as a keyboard, and image input means such as a scanner, or any combination of such components together with additional components. Aspects of the invention can be provided in software and/or hardware form, or in an application-specific apparatus or application-specific modules can be provided, such as chips. Components of a system in an apparatus according to an embodiment of the invention may be provided remotely from other components, for example, over the internet.

**Claims**

1. A method of representing an image comprising deriving at least one 1-dimensional representation of the image by projecting the image onto an axis, wherein the projection involves summing values of selected pixels in a respective line of the image perpendicular to said axis, **characterised in that** the number of selected pixels is less than the number of pixels in the line.

2. The method of claim 1 wherein the projection involves summing values of selected pixels in a plurality of respective lines, wherein the number of selected pixels in at least one line is less than the number of pixels in the respective line.

3. The method of claim 1 or claim 2 for representing an image comprising a 2-dimensional image, the method comprising deriving at least one of a horizontal projection and a vertical projection by summing pixel values in columns or rows perpendicular to a horizontal and vertical axis respectively.

4. The method of claim 3 comprising omitting all pixels from one or more rows in a vertical projection and/or all pixels from one or more columns in a horizontal projection.

5. The method of any preceding claim comprising omitting pixels from each ith row, in a vertical projection and/or each jth column, in a horizontal projection, where i and j are integers greater than 1.

6. The method of any preceding claim wherein, for an image divided into blocks of size mxn, in at least one block, fewer than mxn pixels are selected.

7. The method of claim 6 comprising dividing an image into blocks.

8. The method of claim 6 or claim 7 wherein for a block of size mxn, where m is greater than or equal to n, the pixels of a diagonal of the block or sub-block of size nxn are selected.

9. The method of claim 8 or claim 9 wherein pixels other than the pixels on the diagonal of the nxn block or sub-block are omitted.

10. The method of claim 6 or claim 7 wherein for at least one block, pixels for the summing are randomly selected.

11. The method of claim 8 further comprising permutating the selected pixels in at least one block, by row and/or column.

12. The method of any of claims 6 to 11 wherein patterns of selected pixels are different in different blocks.

13. The method of any of claims 6 to 12 using different block sizes in different areas of the image.

**14.** A method of processing an image or sequence of images using at least one 1-dimensional representation of the image derived using the method of any preceding claim.

**15.** The method of claim 14 comprising comparing images by comparing respective 1-dimensional representations of said images derived using the method of any of claims 1 to 13.

**16.** The method of claim 14 or claim 15 for detecting motion, and/or object tracking.

**17.** The method of claim 15 for estimating dominant motion, for example, dominant translational motion, in a sequence of images.

**18.** The method of any of claims 14 to 17 comprising deriving at least one 1-dimensional representation of the image from the output of a Bayer pattern sensor.

**19.** The method of claim 18 wherein the arrangement of the pixels selected is related to the pattern of one or more channels in the Bayer pattern.

**20.** The method of claim 18 or claim 19 wherein said processing of the output of the Bayer pattern sensor, for example, for motion estimation or detection, is carried out in parallel with processing of the output of the Bayer pattern sensor to create an image.

**21.** The method of claim 18 or claim 19 wherein said processing of the output of the Bayer pattern sensor, for example, for motion estimation or detection, is carried out before processing of the output of the Bayer pattern sensor to create an image, and, optionally, such estimated motion is used for image denoising or deblurring.

**22.** Use, such as storage, transmission, reception, of a representation of an image derived using the method of any of claims 1 to 13.

**23.** A control device programmed to execute the method of any of claims 1 to 21.

**24.** Apparatus for executing the method of any of claims 1 to 21.

**25.** Apparatus of claim 24 comprising an image processing device including a descriptor extractor module.

**26.** Apparatus of claim 24 or claim 25 further comprising a descriptor matching module.

**27.** A computer program, system or computer-readable storage medium for executing the method of any of claims 1 to 21.

Fig.1.

Fig.2.

Fig.3

(a)

(b)

Fig.4

(a)

(b)

**Fig.5**

Fig.6

(a)

(b)

Fig.7

Fig.8

**Fig.9**

Projection of frame K

Projection of frame K-1

Projection of frame K-2

**Fig.10**

Descriptor storage

*Y-Descriptor from the previous frame*   *X-Descriptor from the previous frame*

**Current image**

X-Descriptor extraction

Y-Descriptor extraction

**Descriptor extraction**

X-Descriptor matching

Y-Descriptor matching

**Descriptor matching**

**X-displacement**

**Y-displacement**

**Fig.11**

**Fig.12**

Data
from
sensor
(Bayer pattern)

Spatial
demosaicing

Colour
correction

Gamma
correction

*RGB*
*image*

Motion
estimation

*Motion*
*vector*

*In-camera processing pipeline*

**Fig.13**

*Data from sensor (Bayer pattern)*

Spatial demosaicing → Colour correction → Gamma correction → *RGB-image*

*In-camera processing pipeline*

Motion estimation

*Motion vector*

**Fig.14**

Previous image (Bayer pattern)

Current image (Bayer pattern)

Motion vector

**Fig.15**

*Data from sensor (Bayer pattern)*

Motion estimation → *Motion vector* → Motion is non-zero? → Yes → Signal generation (alarm, *etc.*)

No

**Fig.16**

| | **European Patent Office** | **EUROPEAN SEARCH REPORT** | Application Number EP 06 25 4090 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CATTONI R ET AL: "Geometric Layout Analysis Techniques for Document Image Understanding: a Review" INTERNET CITATION, [Online] January 1998 (1998-01), XP002229195 Retrieved from the Internet: URL:http://tev.itc.it/people/modena/Papers /DOC_SEGstate.pdf> [retrieved on 2003-01-29] * section 3.1 * | 1-27 | INV. G06T7/00 G06T7/20 G06T9/00 |
| D,A | EP 1 659 535 A (MITSUBISHI ELECTRIC INF TECH [GB]; MITSUBISHI ELECTRIC CORP [JP]) 24 May 2006 (2006-05-24) * the whole document * | 1-27 | |
| D,A | ALLINEY S ET AL: "DIGITAL IMAGE REGISTRATION USING PROJECTIONS" IEEE TRANSACTIONS ON PATTERN ANALYSIS AND MACHINE INTELLIGENCE, IEEE SERVICE CENTER, LOS ALAMITOS, CA, US, vol. PAMI-8, no. 2, March 1986 (1986-03), pages 222-223, XP009037165 ISSN: 0162-8828 * the whole document * | 1-27 | TECHNICAL FIELDS SEARCHED (IPC) G06T G06K |
| D,A | MALVAR H S ET AL: "High-quality linear interpolation for demosaicing of bayer-patterned color images" ACOUSTICS, SPEECH, AND SIGNAL PROCESSING, 2004. PROCEEDINGS. (ICASSP '04). IEEE INTERNATIONAL CONFERENCE ON MONTREAL, QUEBEC, CANADA 17-21 MAY 2004, PISCATAWAY, NJ, USA,IEEE, 17 May 2004 (2004-05-17), pages 485-488, XP010718232 ISBN: 0-7803-8484-9 * the whole document * | 1-27 | |

The present search report has been drawn up for all claims

| Place of search | Date of completion of the search | Examiner |
|---|---|---|
| Berlin | 2 July 2007 | Bouchaâla, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

European Patent
Office

Application Number

EP 06 25 4090

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☒ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

**European Patent Office**

**LACK OF UNITY OF INVENTION
SHEET B**

Application Number

EP 06 25 4090

The Search Division considers that the present European patent application does not comply with the requirements of unity of invention and relates to several inventions or groups of inventions, namely:

1. claims: 1-14, 22-25, 27

    in the framework of image projection representation by summing less than the number of pixels of a projection line: various methods of pixel selections for summation
    ---

2. claims: 15-17, 26

    in the framework of image projection representation by summing less than the number of pixels of a projection line: using the projection representation in image comparison and motion detection
    ---

3. claims: 18-21

    in the framework of image projection representation by summing less than the number of pixels of a projection line: using the projection representation for Bayer-pattern color image processing
    ---

**ANNEX TO THE EUROPEAN SEARCH REPORT
ON EUROPEAN PATENT APPLICATION NO.**

EP 06 25 4090

This annex lists the patent family members relating to the patent documents cited in the above-mentioned European search report.
The members are as contained in the European Patent Office EDP file on
The European Patent Office is in no way liable for these particulars which are merely given for the purpose of information.

02-07-2007

| Patent document cited in search report | | Publication date | Patent family member(s) | | Publication date |
|---|---|---|---|---|---|
| EP 1659535 | A | 24-05-2006 | CN | 1784010 A | 07-06-2006 |
| | | | JP | 2006146926 A | 08-06-2006 |
| | | | US | 2006159311 A1 | 20-07-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 0425430 A
- US 3971065 A
- US 4642678 A
- US 4774565 A
- US 5382976 A
- US 5373322 A
- US 5629734 A

### Non-patent literature cited in the description

- **C.MORANDI.** Digital image registration using projections. *IEEE TPAMI-8,* March 1986, 222-223
- **HENRIQUE MALVAR ; LI-WEI HE ; ROSS CUTLER.** High-quality linear interpolation for demosaicing of Bayer-patterned color images. *IEEE International Conference on Speech, Acoustics, and Signal Processing,* 2004